# EUROPÄISCHE PATENTSCHRIFT

(11) **EP 2 653 074 B1**
(45) Veröffentlichungstag und Bekanntmachung des Hinweises auf die Patenterteilung: **28.12.2016**
(21) Anmeldenummer: 13161907.4
(22) Anmeldetag: 02.04.2013
(51) Int. Cl.: A47G 25/06, B60R 7/10, A47F 5/08, B61D 37/00

(54) **Wandhakensystem zum Aufhängen von Garderobenkleidung, insbesondere für einen Zug**
Wall hook system for suspending wardrobe clothing, in particular for a train
Système de crochet mural pour suspendre des vêtements, notamment dans un train

(30) Priorität: 17.04.2012 DE 102012206314
(43) Veröffentlichungstag der Anmeldung: 23.10.2013
(73) Patentinhaber: Siemens Aktiengesellschaft, 80333 München (DE)
(72) Erfinder: Biadatz, Adrian, 47804 Krefeld (DE); Kirchhoff, Sascha, 47799 Krefeld (DE)

(56) Entgegenhaltungen:
- DE-U1-202008 002 783
- FR-A- 834 465
- US-A- 4 658 967
- US-A- 5 626 243

## Beschreibung

Die Erfindung betrifft ein Wandhakensystem zum Aufhängen von Garderobenkleidung, insbesondere für einen Zug, und ein Verfahren zum Zusammenbauen eines Wandhakensystems, insbesondere für einen Zug, mit einem länglichen Führungselement und zwei Hakenelementen, die an dem Führungselement angeordnet sind, wobei die zwei Hakenelemente linear entlang des Führungselements bewegbar ausgebildet sind. Ein solches Wandhakensystem ist beispielsweise aus der US 4658967 A bekannt.

Es ist aus der Praxis bekannt, dass ein Wandhakensystem zum Aufhängen von Garderobenkleidung eines Zugs ein einzelnes Hakenelement in Form eines Kleiderhakens aufweist, das an einer Innenwandverkleidung einer Seitenwand des Zugs befestigt ist. Das Hakenelement dient dazu, Fahrgästen des Zugs es zu ermöglichen, während der Zugfahrt deren Garderobe aufzuhängen. Üblicherweise ist das Hakenelement im Bereich von zwei aneinandergrenzenden Platten der Innenwandverkleidung in eine der beiden Platten eingeschraubt.

Es besteht ein allgemeines Bedürfnis, einem Fahrgast eines Zugs auf einfache und kostengünstige Weise ausreichend Platz für seine Garderobenkleidung bereitzustellen, der unabhängig vom Sitzplatz des Fahrgasts gut zugänglich sein kann.

Es ist die Aufgabe der Erfindung, Maßnahmen aufzuzeigen, mit deren Hilfe einem Fahrgast eines Zugs auf einfache und kostengünstige Weise ausreichend Platz für seine Garderobenkleidung bereitgestellt werden kann, der unabhängig vom Sitzplatz des Fahrgasts gut zugänglich sein kann.

Die Lösung der Aufgabe erfolgt erfindungsgemäß durch ein Wandhakensystem zum Aufhängen von Garderobenkleidung, insbesondere für einen Zug, mit den Merkmalen des Anspruchs 1 und ein Verfahren zum Zusammenbauen eines Wandhakensystems zum Aufhängen von Garderobenkleidung, insbesondere für einen Zug, mit den Merkmalen des Anspruchs 11. Bevorzugte Ausgestaltungen der Erfindung sind in den Unteransprüchen angegeben.

Erfindungsgemäß ist ein Wandhakensystem zum Aufhängen von Garderobenkleidung, insbesondere für einen Zug, vorgesehen, mit einem länglichen Führungselement und zwei Hakenelementen, die an dem Führungselement angeordnet sind, wobei die zwei Hakenelemente linear entlang des Führungselements bewegbar ausgebildet sind.

Das erfindungsgemäße Wandhakensystem beruht folglich auf dem Konzept, dass zwei Hakenelemente an einem länglichen Führungselement vorgesehen sein können, die beispielsweise entlang oder entgegen einer Verstellrichtung linear bewegbar ausgebildet sein können. Dadurch können zwei Hakenelemente beispielsweise durch den Fahrgast selbst an beliebigen, verschiedenen Positionen bezüglich des länglichen Führungselements angeordnet werden, so dass die Hakenelemente unabhängig vom Sitzplatz des Fahrgasts stets gut zugänglich sein können.

Das Wandhakensystem kann daher ausreichend Platz für Garderobenkleidung von Fahrgästen eines Zugs bereitstellen, da zwei Hakenelemente an dem länglichen Führungselement vorgesehen sein können.

Ferner kann das Wandhakensystem eine einfache Bauweise mit wenigen Bauteilen aufweisen, so dass das Wandhakensystem besonders kostengünstig gefertigt, zusammengebaut oder montiert und in seine Einzelteile zerlegt oder demontiert werden kann.

Im Folgenden werden Ausführungsformen des Wandhakensystems beschrieben. Diese gelten auch für den Zug und das Verfahren.

Das Wandhakensystem weist ferner ein Verbindungselement auf, mittels dem die zwei Hakenelemente zueinander lagefest gehalten sein können, und das Verbindungselement kann lösbar mit dem Führungselement in Eingriff stehen. Dadurch kann eine gemeinsame Bewegung der zwei Hakenelemente entlang des Führungselements ermöglicht sein, so dass die Positionierung der zwei Hakenelemente entlang des Führungselements besonders einfach und schnell erfolgen kann. Die lösbare Anordnung des Verbindungselements an dem Führungselement kann einen besonders einfachen Zusammenbau des Wandhakensystems beziehungsweise eine besonders einfache Zerlegung des Wandhakensystems in Einzelteile ermöglichen. Gleichzeitig können die zwei Hakenelemente bei einer Belastung durch Garderobenkleidung mittels des zusätzlichen Verbindungselements stabilisiert und an dem Führungselement sicher angeordnet sein.

Insbesondere kann das Verbindungselement an einer gemeinsamen Seite der zwei Hakenelemente angeordnet sein, die von dem Führungselement abgewandt sein kann. Dadurch kann der Zusammenbau beziehungsweise die Zerlegung des Wandhakensystems besonders einfach erfolgen, da die zwei Hakenelemente und das Verbindungselement nacheinander an dem Führungselement angeordnet beziehungsweise von diesem entfernt werden können. Ferner kann das Wandhakensystem in seinem zusammengebauten Zustand eine besonders kompakte Bauweise aufweisen.

Insbesondere können sich die zwei Hakenelemente quer, insbesondere senkrecht, zu einer Längserstreckung des Führungselements erstrecken. Insbesondere kann ein Endabschnitt jedes Hakenelements einen Befestigungsabschnitt zum Befestigen des jeweiligen Hakenelements an dem Führungselement bilden, während ein Kleiderhakenabschnitt an einem gegenüber liegenden Endabschnitt des ersten und zweiten Hakenelements gut zugänglich sein kann.

Das Führungselement kann einen länglichen Körper aufweisen, und der Körper kann eine erste Aufnahme, die sich zumindest teilweise oder vollständig entlang einer ersten Längsseite des Körpers erstrecken kann, und eine zweite Aufnahme aufweisen, die sich zumindest teilweise oder vollständig entlang einer zweiten Längsseite des Körpers erstrecken kann, und die zwei Hakenelemente können formschlüssig mit der ersten Aufnahme und der zweiten Aufnahme in Eingriff stehen. Der Körper des Führungselements kann beispielsweise quaderförmig ausgebildet sein. Die erste Aufnahme und die zweite Aufnahme können als Nuten ausgebildet sein, in denen das ersten und zweiten Hakenelement bewegbar sein können. Dadurch kann das Führungselement eine Führungsschiene bilden, entlang der die zwei Hakenelemente bewegt werden können. Insbesondere kann das formschlüssige In-Eingriff-Stehen der zwei Hakenelemente mit der ersten Aufnahme und der zweiten Aufnahme einerseits eine stabile Anordnung der zwei Hakenelemente an dem Führungselement und andererseits eine lineare Bewegbarkeit der zwei Hakenelemente entlang des Führungselements ermöglichen.

Das Verbindungselement kann einen länglichen Körper aufweisen, und ein erster Längsendabschnitt des Körpers und ein zweiter Längsendabschnitt des Körpers können quer, insbesondere senkrecht, zu einer Längserstreckung des Körpers des Verbindungselements umgebogen sein, und das Verbindungselement kann kraftschlüssig das erste Hakenelement und das zweite Hakenelement teilweise umgreifen. Das erste Hakenelement und das zweite Hakenelement können mittels der kraftschlüssigen Verbindung zwischen dem Verbindungselement und dem ersten und zweiten Hakenelement zueinander lagefest gehalten und gemeinsam entlang des Führungselements bewegbar sein. Diese Art der Verbindung kann besonders kostengünstig und einfach sein, da kein zusätzliches Bauteil benötigt wird.

Das erste Hakenelement und das zweite Hakenelement können zueinander im Wesentlichen parallel angeordnet sein, und der erste Längsendabschnitt kann an einer Stirnseite des ersten Hakenelements und der zweite Längsendabschnitt kann an einer Stirnseite des zweiten Hakenelements kraftschlüssig anliegen, und die Stirnseite des ersten Hakenelements und die Stirnseite des zweiten Hakenelements können voneinander abgewandt sein. Dies kann auf besonders einfache Weise eine kraftschlüssige und gleichzeitig formschlüssige Verbindung zwischen dem ersten und zweiten Hakenelement und dem Verbindungselement ermöglichen. Insbesondere können die Stirnseiten Längsseiten des Körpers des ersten Hakenelements und des zweiten Hakenelements sein und entlang der Längserstreckung des Verbindungselements und/oder entlang beziehungsweise entgegen der Verstellrichtung weisen.

Das Verbindungselement kann einen länglichen Körper mit einem ersten Querendabschnitt und einem zweiten Querendabschnitt aufweisen, und der erste Querendabschnitt und der zweite Querendabschnitt können von gegenüber liegenden Längsseiten des Körpers des Verbindungselements vorspringen und formschlüssig in das Führungselement eingreifen. Dabei kann der erste Querendabschnitt in die erste Aufnahme des Führungselements eingreifen, und der zweite Querendabschnitt kann in die zweite Aufnahme des Führungselements eingreifen, so dass das Verbindungselement an zwei Verbindungsstellen mit dem Führungselement in Eingriff stehen und eine Stabilität des Wandhakensystems erhöht sein kann. Ferner kann ein Zusammenbau und eine entsprechende Zerlegung des Wandhakensystems besonders einfach durchgeführt werden, indem der zweite Querendabschnitt des Verbindungselements zuerst in die zweite Aufnahme des Führungselements eingebracht und danach der erste Querendabschnitt in die erste Aufnahme des Führungselements gedrückt werden kann.

Der Körper des Verbindungselements kann einen länglichen, flachen Grundkörper aufweisen, und der erste Querendabschnitt kann unter einem spitzen Winkel bezüglich des Grundkörpers umgebogen sein. Dadurch kann der erste Querendabschnitt zum Führungselement hingebogen sein und besonders einfach in die erste Aufnahme des Führungselements eingreifen. Der flache Grundkörper des Verbindungselements kann eine besonders große Anlagefläche für das erste und zweite Hakenelement ermöglichen, so dass eine Stabilität des Wandhakensystems besonders groß sein kann.

Insbesondere kann der spitze Winkel höchstens etwa 55 Grad, insbesondere höchstens etwa 50 Grad, weiter insbesondere höchstens etwa 45 Grad betragen, und/oder der spitze Winkel kann zumindest etwa 30 Grad, insbesondere zumindest etwa 35 Grad, weiter insbesondere zumindest etwa 40 Grad, betragen. Mit abnehmenden Wert des Maximalwinkels kann gewährleistet sein, dass eine ausreichende Haltekraft zwischen dem Verbindungselement und dem Führungselement aufgebracht werden kann, so dass das Verbindungselement in einer Richtung quer, insbesondere senkrecht, zur Längsrichtung der ersten und zweiten Aufnahme lagefest gehalten werden und dadurch der Formschluss bewirkt sein kann. Der zunehmende Wert des Minimalwinkels kann eine ausreichend dicke Ausgestaltung des ersten Hakenelements und des zweiten Hakenelements bewirken, so dass die Stabilität des ersten und zweiten Hakenelements während des Gebrauchs des Wandhakensystems besonders gut sein kann und insbesondere ein Brechen des ersten und zweiten Hakenelements verhindert werden kann.

Ein Ende des ersten Querendabschnitts kann im Wesentlichen quer, insbesondere senkrecht, zum übrigen ersten Querendabschnitt umgebogen sein und vom Grundkörper weg weisen. Diese im Querschnitt gesehen im Wesentlichen V-förmige Ausgestaltung des ersten Querendabschnitts kann ein Verspannen des ersten Querendabschnitts in der ersten Aufnahme bewerkstelligen, so dass der Formschluss zwischen dem Verbindungselement und dem Führungselement zusätzlich verbessert sein kann. Dabei kann das Verbindungselement um eine Biegestelle des ersten Querendabschnitts verschwenkbar sein, so dass das Anbringen und das Lösen des Verbindungselements besonderes einfach durchgeführt werden kann.

Der zweite Querendabschnitt kann im Wesentlichen quer, insbesondere senkrecht, zum Grundkörper umgebogen sein, und ein Ende des zweiten Querendabschnitts kann quer, insbesondere senkrecht, zum übrigen zweiten Querendabschnitt umgebogen und dem Grundkörper zugewandt sein. Dadurch kann der zweite Querendabschnitt im Querschnitt gesehen im Wesentlichen L-förmig ausgebildet sein, so dass der zweite Querendabschnitt einerseits das Führungselement bis zur zweiten Aufnahme hin umgreifen und in der zweiten Aufnahme lagesicher angeordnet sein kann. Insbesondere kann das Verbindungselement aufgrund der Biegung des Endes des zweiten Querendabschnitts in eine Richtung quer, insbesondere senkrecht, zur Längserstreckung des Verbindungselements unbeweglich angeordnet sein, so dass der Formschluss zwischen dem zweiten Querendabschnitt und dem Führungselement bewerkstelligt sein kann.

Das Verbindungselement kann einstückig und/oder als Blattfeder ausgebildet sein. Dadurch kann das Verbindungselement besonders kostengünstig gefertigt sein, so dass Zusammenbau und Zerlegungskosten und auch Fertigungskosten des Wandhakensystems besonders gering sein können. Die Ausgestaltung des Verbindungselements als insbesondere biegsame Blattfeder kann ein besonders einfaches Verbinden des Verbindungselements mit dem Führungselement und dem ersten und zweiten Hakenelement und ein besonders einfaches Lösen des Verbindungselements von diesen Bauteilen ermöglichen, so dass der Zusammenbau und die Zerlegung des Wandhakensystems besonders einfach durchgeführt werden kann. Ferner kann bei einer ausreichenden Federvorspannung ein zusätzliches Drücken des ersten und zweiten Längsendabschnitts gegen das erste beziehungsweise zweite Hakenelement und des ersten und zweiten Querendabschnitts gegen das Führungselement bewirkt sein, so dass die lagefeste Anordnung dieser Bauteile erhöht sein kann.

Das Wandhakensystem kann ferner ein Anschlagelement für das erste und zweite Hakenelement aufweisen, und das Anschlagelement kann lagefest an dem Führungselement angeordnet sein. Dieser Stopper für das erste und zweite Hakenelement kann die maximale Bewegung des ersten und zweiten Hakenelements entlang des Führungselements begrenzen. Das Anschlagelement kann beispielsweise benachbart zu einem Fenster des Zugs angeordnet sein, so dass das erste und zweite Hakenelement in einem ausreichenden Abstand von dem Fenster positioniert werden können und die Garderobenkleidung bei einem Gebrauch des Wandhakensystems außerhalb eines Sichtbereichs des Fahrgasts durch das Fenster des Zugs angeordnet werden kann.

Insbesondere kann das Wandhakensystem zumindest weitere zwei Hakenelemente aufweisen, die mittels eines weiteren Verbindungselements zueinander lagefest gehalten sein können, und das weitere Verbindungselement kann lösbar mit dem Führungselement in Eingriff stehen.

Alternativ oder zusätzlich kann das Wandhakensystem insbesondere zumindest ein weiteres Hakenelement aufweisen, das mittels des Verbindungselements bezüglich der zwei Hakenelemente lagefest gehalten und linear entlang des Führungselements bewegbar sein kann. Dabei kann das Verbindungselement einen weiteren ersten Querendabschnitt, der identisch zu dem ersten Querendabschnitt ausgebildet sein kann, und einen weiteren zweiten Querendabschnitt aufweisen, der identisch zu dem zweiten Querendabschnitt ausgebildet sein kann. Der weitere erste Querendabschnitt kann benachbart zu dem ersten Querendabschnitt an der Längsseite des Körpers des Verbindungselements angeordnet sein, und der weitere zweite Querendabschnitt kann benachbart zu dem zweiten Querendabschnitt an der zweiten Längsseite des Verbindungselements angeordnet sein.

Diese beiden Maßnahmen können eine einfache Skalierbarkeit der Anzahl der Hakenelemente des Wandhakensystems bei einer ausreichenden Längserstreckung des Führungselements ermöglichen, bei der gleichzeitig die Bewegbarkeit aller Hakenelemente entlang des Führungselements erhalten sein kann.

Die Erfindung betrifft ferner einen Zug, insbesondere einen Hochgeschwindigkeitszug, mit einem Wandhakensystem zum Aufhängen von Garderobenkleidung, das oben beschrieben ist. Ein längliches Führungselement des Wandhakensystems kann insbesondere an einer Seitenwandverkleidung des Zugs befestigt sein, und das Führungselement kann sich im Wesentlichen parallel zu einem Boden des Zugs erstrecken. Den Hakenabschnitt des ersten und zweiten Hakenelements kann zum Boden des Zugs weisen.

Die Erfindung betrifft ferner ein Verfahren zum Zusammenbauen eines Wandhakensystems zum Aufhängen von Garderobenkleidung, insbesondere für einen Zug, das oben beschrieben ist, mit den Schritten Bereitstellen eines länglichen Führungselements, Bereitstellen von zwei Hakenelementen, und Anordnen der zwei Hakenelemente an dem Führungselement, derart, dass die zwei Hakenelemente entlang des Führungselements linear bewegbar ausgebildet sein können. Insbesondere können das erste Hakenelement und das zweite Hakenelement nacheinander auf das Führungselement aufgeschoben werden, und ein erster Fortsatz und ein zweiter Fortsatz eines Befestigungsabschnitts des ersten und zweiten Hakenelements können formschlüssig in eine erste Aufnahme und eine zweite Aufnahme eines Körpers des Führungselements eingreifen, die an gegenüberliegenden Längsseiten des Führungselements vorgesehen sein können. Danach können das erste Hakenelement und das zweite Hakenelement relativ zueinander in einem entsprechenden Abstand angeordnet werden, so dass ein Verbindungselement auf das Führungselement aufgebracht werden kann und gleichzeitig das erste und zweite Hakenelement umgeben kann.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei können die nachfolgend dargestellten Merkmale sowohl jeweils einzeln als auch in Kombination einen Aspekt der Erfindung darstellen. Es zeigen:
Fig. 1 eine schematische perspektivische Ansicht eines Wandhakensystems gemäß einem Ausführungsbeispiel;
Fig. 2 eine schematische Querschnittansicht eines Hakenelements in Fig. 1;
Fig. 3 eine schematische perspektivische Ansicht eines Verbindungselements in Fig. 1;
Fig. 4 eine schematische Querschnittansicht des Verbindungselements in Fig. 3;
Fig. 5 eine schematische Seitenansicht des Verbindungselements in Fig. 3;
Fig. 6 eine schematische Ansicht von oben auf das Verbindungselement in Fig. 3;
Fig. 7-12 schematische perspektivische Ansichten des Wandhakensystems während seines Zusammenbaus; und
Fig. 13-16 schematische perspektivische Ansichten des Wandhakensystems in Fig. 1 während seines Zerlegens in Einzelteile.

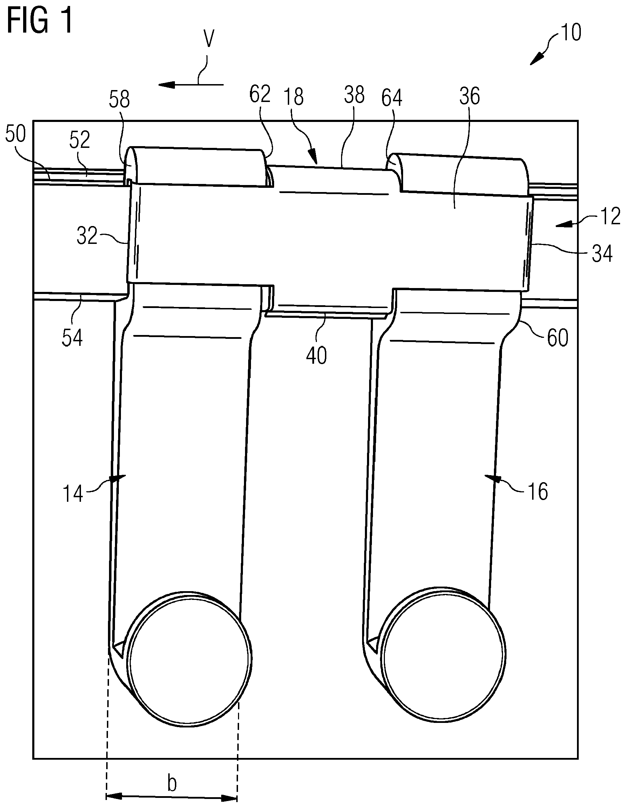

Das in Fig. 1 dargestellte Wandhakensystem 10 eines Hochgeschwindigkeitszugs weist ein Führungselement 12 auf, an dem ein erstes Hakenelement 14 und ein zweites Hakenelement 16 mittels eines als einstückige Metallblattfeder ausgebildeten Verbindungselements 18 angeordnet sind. Das erste Hakenelement 14 und das zweite Hakenelement 16 sind linear entlang einer Verstellrichtung V beweglich ausgebildet, die einer Längserstreckung eines länglichen Körpers 17 des Führungselements 12 entspricht. Das erste Hakenelement 14 und das zweite Hakenelement 16 sind identisch ausgebildet.

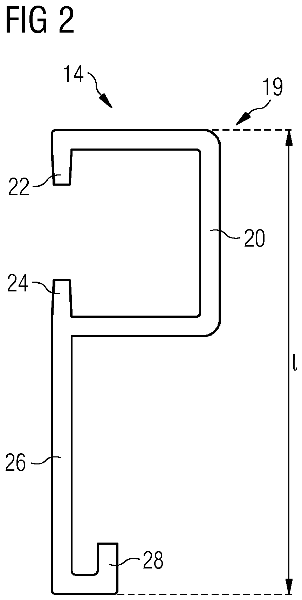

Wie in Fig. 2 gezeigt, weist das erste Hakenelement 14 einen Befestigungsabschnitt 20 auf, der, im Querschnitt gesehen, im Wesentlichen U-förmig ausgebildet ist und zwei nach innen weisende Fortsätze 22, 24, die an einem offenen Querschnittsende des Befestigungsabschnitts 20 an Schenkeln des Befestigungsabschnitts 20 angeordnet sind, aufweist. Ein Hakenabschnitt 26 des ersten Hakenelements 14 weist an seinem Endbereich, der vom Befestigungsabschnitt 20 abgewandt ist, einen runden Kleiderhakenknopf 28 auf. Der Hakenabschnitt 26 erstreckt sich senkrecht zu den Schenkeln des Befestigungsabschnitts 20, und ist in Verlängerung der Fortsätze 22, 24 angeordnet. Der Kleiderhakenknopf 28 ist bezüglich einer Längserstreckung des ersten Hakenelements 14 auf einer gleichen Seite wie der Befestigungsabschnitt 20 angeordnet.

Ein Länge 1 des ersten Hakenelements 14 beträgt 6 Zentimeter, und eine Breite b des ersten Hakenelements 14 beträgt 2 Zentimeter (Fig. 1).

Das Hakenelement 14 ist einstückig aus Kunststoff ausgebildet.

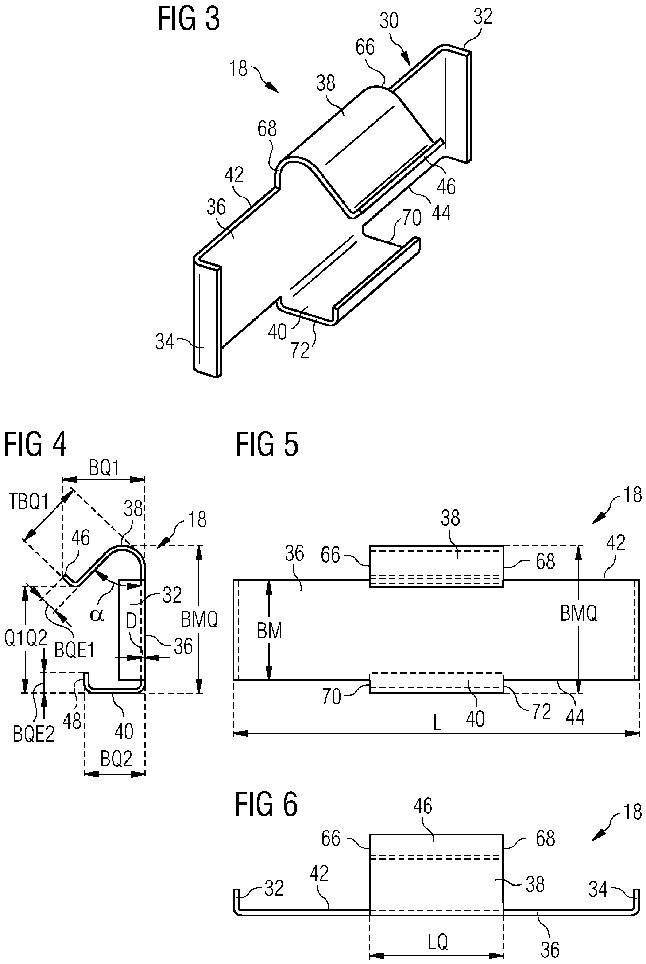

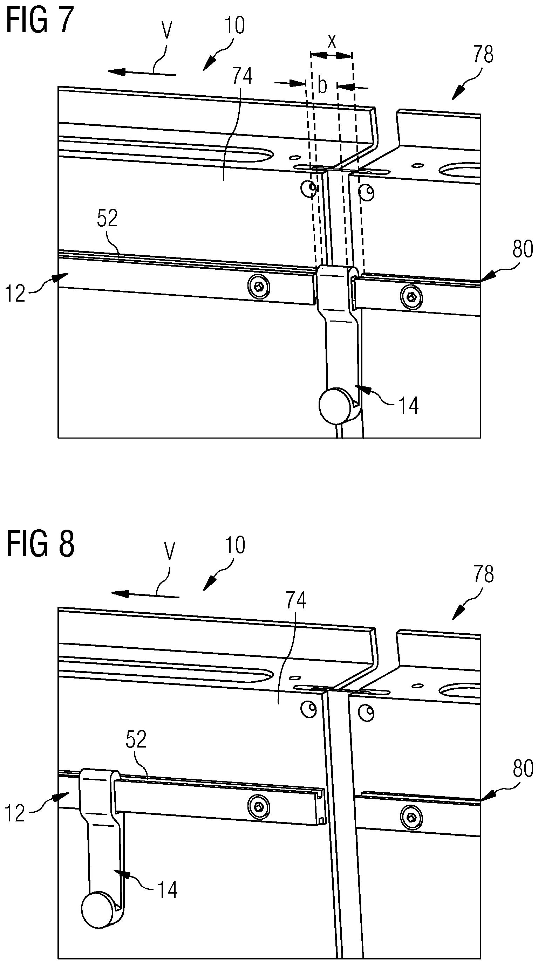

Mit Bezug auf Fig. 3-6 weist das Verbindungselement 18 einen länglichen, flachen Körper 30 auf, der entlang einer Längserstreckung des Körpers 30 gesehen einen ersten Längsendabschnitt 32 und einen zweiten Längsendabschnitt 34 aufweist. Der erste und zweite Längsendabschnitt 32, 34 sind bezüglich eines flachen Grundkörpers 36 des Körpers 30 rechtwinklig umgebogen. Ein erster Querendabschnitt 38 und ein zweiter Querendabschnitt 40 des Verbindungselements 18 sind an gegenüberliegenden Längsseiten 42, 44 des Grundkörpers 36 angeordnet und springen von dem Grundkörper (36) vor. Der erste Querendabschnitt 38 ist nach innen in Richtung der ersten und zweiten Längsendabschnitte 32, 34 gebogen, so dass sich der erste Querendabschnitt 38 im Wesentlichen unter einem Winkel α von etwa 43 Grad bezüglich des Grundkörpers 36 erstreckt (Fig. 7). Ein Ende 46 des ersten Querendabschnitts 38 ist rechtwinkelig bezüglich des restlichen ersten Querendabschnitts 38 umgebogen und weist von dem Grundkörper 36 weg. Der zweite Querendabschnitt 40 ist rechtwinkelig bezüglich des Grundkörpers umgebogen und weist ebenso wie der erste Querendabschnitt 38 in Richtung der ersten und zweiten Längsendabschnitte 32, 34. Ein Ende 48 des zweiten Querendabschnitts 40 ist rechtwinkelig bezüglich des übrigen zweiten Querendabschnitts 40 umgebogen und weist zum ersten Querendabschnitt 38 hin.

Folglich bilden der erste Längsendabschnitt 32 beziehungsweise der zweite Längsendabschnitt 34 jeweils zusammen mit dem Grundkörper 36 Klammern zum kraftschlüssigen, teilweisen Umgreifen des ersten beziehungsweise zweiten Hakenelements 14, 16. Der erste Querendabschnitt 38 beziehungsweise der zweite Querendabschnitt 40 bilden jeweils mit dem Grundkörper 36 Klammern, mit dem das Verbindungselement 18 formschlüssig an dem Führungselement 12 befestigt werden kann.

Eine Länge L des Verbindungselements 18 beträgt 6,15 Zentimeter. Eine senkrecht zur Längserstreckung des Verbindungselements 18 gemessene Breite BM des Grundkörpers 36 des Verbindungselements 18 beträgt 1,5 Zentimeter und ein Breite BMQ des Verbindungselements 18, die senkrecht zur Längserstreckung des Verbindungselements 18 im Bereich des ersten und zweiten Querendabschnitts 38, 40 gemessen ist, beträgt 2,22 Zentimeter. Eine Dicke D des Verbindungselements beträgt 0,05 Zentimeter.

Eine entlang der Längserstreckung des Verbindungselements 18 gemessene Länge LQ des ersten und zweiten Querendabschnitts 38, 40 beträgt 2 Zentimeter. Eine Breite BQ1 des ersten Querendanschnitts 38, die senkrecht zur Längserstreckung des Verbindungselements 18 gemessen ist, beträgt 1,2 Zentimeter. Eine Breite BQ2 des zweiten Querendanschnitts 38, die senkrecht zur Längserstreckung des Verbindungselements 18 gemessen ist, beträgt 0,9 Zentimeter.

Eine senkrecht zur Längserstreckung des ersten Querendabschnitts 38 gemessene Breite TBQ1 des ersten Querendabschnitts 38 beträgt 1,05 Zentimeter. Eine senkrecht zur Längserstreckung des ersten Querendabschnitts 38 gemessene Breite BQE1 des Endes 46 des ersten Querendabschnitts 38 beträgt 0,25 Zentimeter. Eine senkrecht zur Längserstreckung des zweiten Querendabschnitts 40 gemessene Breite BQE2 des Endes 48 des zweiten Querendabschnitts 40 beträgt 0,03 Zentimeter.

Ein Abstand Q1Q2 zwischen dem ersten Querendabschnitt 38 und dem zweiten Querendabschnitt 40, der entlang einer Breitenrichtung des Verbindungselements 18 gemessen ist, beträgt 1,56 Zentimeter.

Erneut mit Bezug auf Fig. 1 weist der Körper 17 des Führungselements 12 entlang seiner ersten Längsseite 50 eine erste Aufnahme 52 auf, die sich vollständig entlang der ersten Längsseite 50 erstreckt und als Nut ausgebildet ist. Eine zweite Aufnahme ist in eine der ersten Längsseite 50 gegenüber liegenden Längsseite 54 des Körpers 17 des Führungselements 12 eingebracht, die sich auch vollständig entlang des Führungselements 12 erstreckt und als Nut ausgebildet ist.

Dimensionen des Führungselements 12 sind an die Dimensionen des ersten und zweiten Hakenelements 14, 16 und des Verbindungselements 18 angepasst.

Der erste Fortsatz 22 des ersten und zweiten Hakenelements 14, 16 ist in der ersten Aufnahme 52 angeordnet, und der zweite Fortsatz 24 des ersten und zweiten Hakenelements 14, 16 ist in der zweiten Aufnahme des Führungselements 12 angeordnet, so dass das erste Hakenelement 14 und das zweite Hakenelement 16 in den Aufnahmen 52 des Führungselements 12 formschlüssig eingehängt sind. Dabei weist der Kleiderhakenabschnitt 28 jedes Hakenelements 14, 16 in Richtung eines Bodens des Zugs. Der erste Längsendabschnitt 32 umgreift teilweise eine Stirnseite 58 des Befestigungsabschnitts 20 des ersten Hakenelements 14, und der zweite Längsendabschnitt 34 umgreift teilweise eine Stirnseite 60 des Befestigungsabschnitts des zweiten Hakenelements 16, die von der Stirnseite 58 des Befestigungsabschnitts 20 des ersten Hakenelements 14 abgewandt ist. Der erste Querendabschnitt 38 des Verbindungselements 18 ist in der Aufnahme 52 formschlüssig eingebracht, indem das Ende 46 des ersten Querendabschnitts 38 in der nutförmigen Aufnahme 52 verspannt ist. Das Ende 48 des zweiten Querendabschnitts 40 des Verbindungselements 18 ist in der zweiten Aufnahme des Führungselements 12 formschlüssig aufgenommen. Dadurch sind das erste und zweite Hakenelement 14, 16 entlang der Verstellrichtung V linear bewegbar und in einer Ebene, die senkrecht zur Verstellrichtung V verläuft, im Wesentlichen lagefest, d.h. unbeweglich, angeordnet. Zueinander gewandte Stirnseiten 62, 64 der Befestigungsabschnitte 20 des ersten und zweiten Hakenelements 14, 16 liegen kraftschlüssig an bezüglich der Längserstreckung des Körpers 30 des Verbindungselements 18 quer verlaufenden Stirnseiten 66-72 des ersten und zweiten Querendabschnitts 38, 40 an. Dadurch bilden das ersten Hakenelement 14, das zweite Hakenelement 16 und das Verbindungselement 18 einen Verbund.

In einem Betrieb des Wandhakensystems 10 werden das erste Hakenelement 14, das zweite Hakenelement 16 und das Verbindungselement 18 gemeinsam als Verbund linear entlang oder entgegen der Verstellrichtung V bewegt, um das erste Hakenelement 14 und das zweite Hakenelement 16 an einer beliebigen Position entlang des Führungselements 12 anzuordnen.

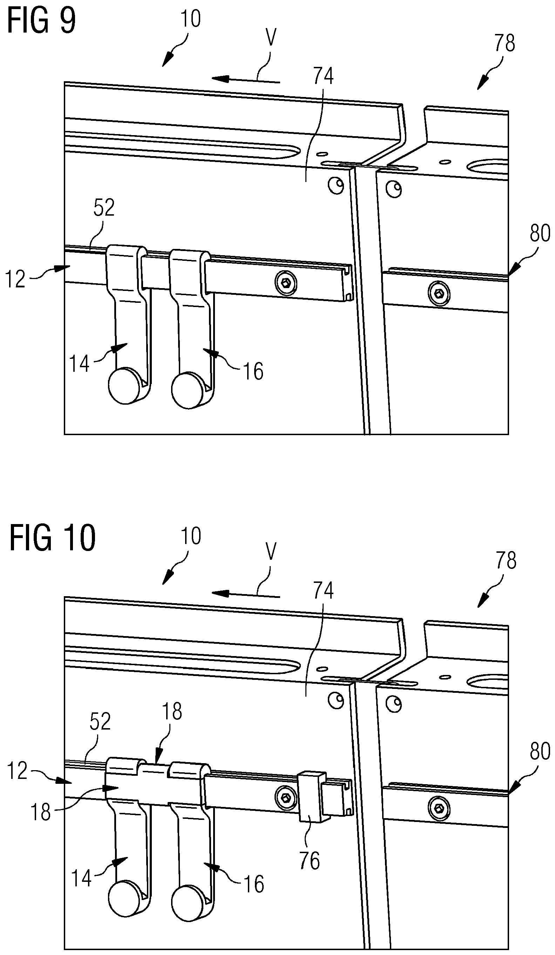

Mit Bezug auf Fig. 7-12 wird ein Verfahren zum Zusammenbauen des Wandhakensystems 10 erläutert. In einem ersten Schritt wird das Führungselement 12 an einer Seitenwandverkleidung 74 des Hochgeschwindigkeitszugs angeschraubt. Das erste Hakenelement 14 wird mit dem ersten Fortsatz 22 und dem zweiten Fortsatz 24 seines Befestigungsabschnitts 20 auf das Führungselement 12 aufgeschoben. Dabei greift der erste Fortsatz 22 formschlüssig in die erste Aufnahme 52 und der zweite Fortsatz 24 greift formschlüssig in die zweite Aufnahme ein. Danach wird, wie in Fig. 8 gezeigt, das erste Hakenelement 14 entlang der Verstellrichtung V linear bewegt. Im Anschluss daran wird das zweite Hakenelement 16 ähnlich wie das erste Hakenelement 14 auf das Führungselement 12 aufgebracht und entlang der Verstellrichtung V zu dem ersten Hakenelement 16 hin bewegt. In Fig. 9 ist das erste Hakenelement 14 benachbart zum zweiten Hakenelement 16 in einem Abstand angeordnet, der der Länge LQ des ersten und zweiten Querendabschnitts 38, 40 entspricht. In einem nächsten Schritt wird das Verbindungselement 18 in die erste Aufnahme 52 und die zweite Aufnahme mittels der ersten und zweiten Querendabschnitte 38, 40 eingeklinkt, so dass der erste Längsendabschnitt 32 an der Stirnseite 58 des Befestigungsabschnitts 20 des ersten Hakenelements 14 und der zweite Längsendabschnitt 34 an der Stirnseite 60 des Befestigungsabschnitts des zweiten Hakenelements 16 zum Anliegen kommt. Danach wird ein Anschlagelement 76 auf das Führungselement 12 aufgebracht, das ähnlich wie der Befestigungsabschnitt 20 des ersten Hakenelements 14 ausgestaltet ist. Das Anschlagelement 76 wird mittels Verschraubung an dem Führungselement 12 fixiert.

Wie in Fig. 7-10 dargestellt, ist das Wandhakensystem 10 benachbart zu einem weiteren Wandhakensystem 78 angeordnet, das identisch zu dem Wandhakensystem 10 ausgebildet ist und spiegelbildlich bezüglich einer Ebene quer zur Verstellrichtung V angeordnet ist. Der Übersicht halber ist in Figuren 7-10 lediglich ein Führungselement 80 des weiteren Wandhakensystems 78 dargestellt. Ein Abstand x zwischen dem Führungselement 12 des Wandhakensystems 10 und dem Führungselements 80 des spiegelbildlich angeordneten Wandhakensystems 78 ist geringfügig breiter als eine Breite b des ersten Hakenelements 14.

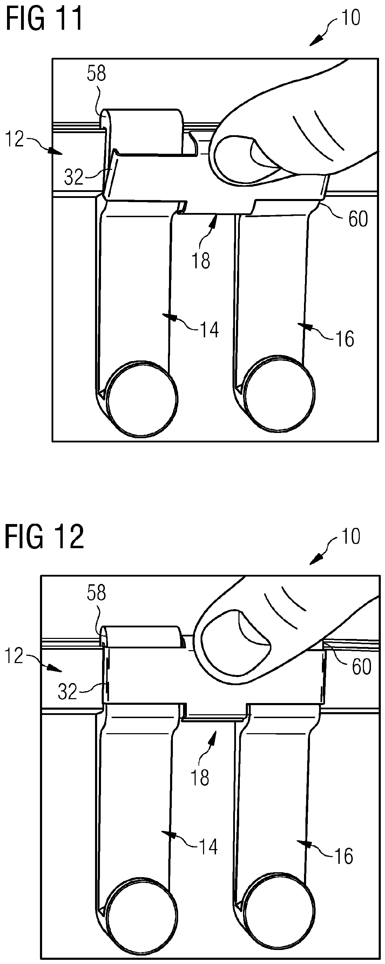

Mit Bezug auf Figuren 11, 12 wird das Anordnen des Verbindungselements 18 an dem ersten Hakenelement 14, dem zweiten Hakenelement 16 und dem Führungselement 12 näher beschrieben. Zunächst wird das Ende 48 des zweiten Querendabschnitts 40 in die zweite Aufnahme des Führungselements 12 eingebracht, indem das Verbindungselement 18 benachbart zum Führungselement 12 angeordnet und schräg zum Führungselement 12 hinbewegt wird. Danach wird der erste Querendabschnitt 38 des Verbindungselements 18 zum Führungselement 12 hin geklappt. Dabei wird der erste Querendabschnitt 38 der Verbindungselements 18 über die Längsseite 50 des Führungselements 12 geführt. Sobald das Ende 46 des ersten Querendabschnitts 38 die erste Aufnahme 52 erreicht, rastet der erste Querendabschnitt 38 in der ersten Aufnahme 52 formschlüssig ein.

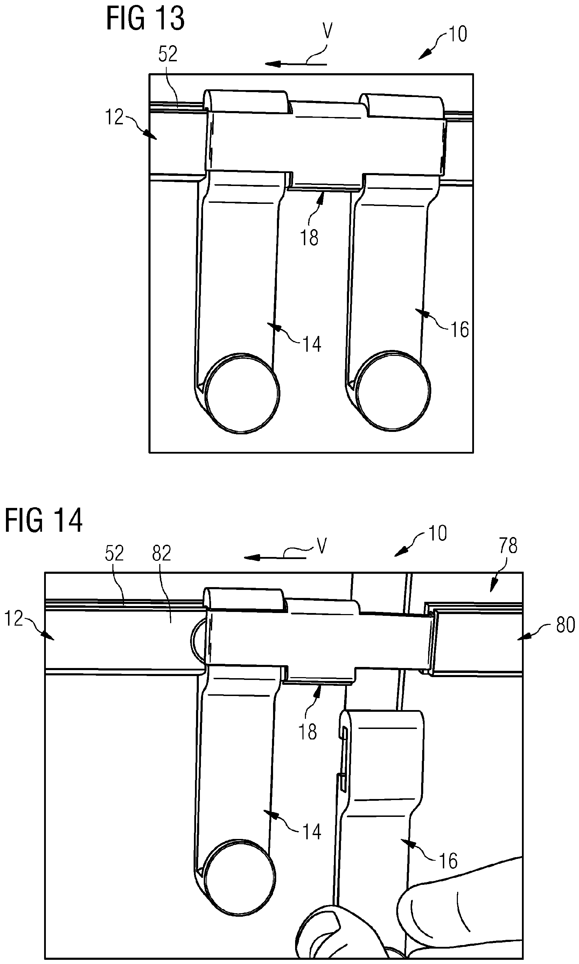

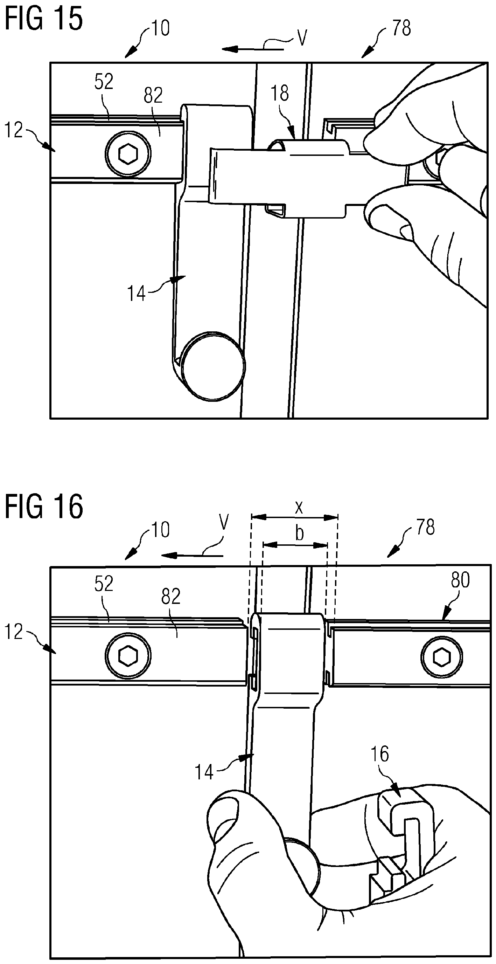

Bei einem in Figuren 13-16 gezeigten Verfahren zum Zerlegen des Wandhakensystems 10 in Einzelteile wird zunächst das Anschlagelement 76 von dem Führungselement 12 entfernt. Der Verbund aus dem ersten Hakenelement 14, dem zweiten Hakenelement 16 und dem Verbindungselement 18 wird entgegen der Verstellrichtung V zu einem Ende 82 des Führungselements 12 verbracht, bis das zweite Hakenelement 16 sowie der erste Querendabschnitt 38 und der zweite Querendabschnitt 40 des Verbindungselements 18 über das Ende 82 des Führungselements 12 hinaus verschoben sind. Dadurch kann das zweite Hakenelement 16, wie in Figur 14 gezeigt, senkrecht zur Verstellrichtung V beispielweise in Richtung des Bodens des Hochgeschwindigkeitszugs abgenommen werden. In einem nächsten Schritt wird das Verbindungselement 18, das kraftschlüssig an dem ersten Hakenelement 14 gehalten ist, entfernt, indem der erste Querendabschnitt 38 des Verbindungselements 18 bezüglich des Führungselements 12 gesehen von dem Führungselement 12 weg bewegt wird. Im Anschluss daran wird das erste Hakenelement 14 über das Ende 66 des Führungselements 12 hinaus verschoben und abgenommen.

Obwohl die Erfindung im Detail durch das bevorzugte Ausführungsbeispiel näher illustriert und beschrieben ist, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Wandhakensystem (10) zum Aufhängen von Garderobenkleidung, insbesondere für einen Zug, mit
- einem länglichen Führungselement (12) und
- zwei Hakenelementen (14, 16), die an dem Führungselement (12) angeordnet sind, wobei die zwei Hakenelemente (14, 16) linear entlang des Führungselements (12) bewegbar ausgebildet sind, und ferner mit:
- einem Verbindungselement (18), mittels dem die zwei Hakenelemente (14, 16) zueinander lagefest gehalten sind, wobei das Verbindungselement (18) lösbar mit dem Führungselement (12) in Eingriff steht.

2. Wandhakensystem (10) nach Anspruch 1,
wobei das Führungselement (12) einen länglichen Körper (17) aufweist, wobei der Körper (17) eine erste Aufnahme (52), die sich zumindest teilweise entlang einer ersten Längsseite (50) des Körpers (17) erstreckt, und eine zweite Aufnahme aufweist, die sich zumindest teilweise entlang einer zweiten Längsseite (54) des Körpers (17) erstreckt, wobei die zwei Hakenelemente (14, 16) formschlüssig mit der ersten Aufnahme (52) und der zweiten Aufnahme in Eingriff stehen.

3. Wandhakensystem (10) nach Anspruch 2,
wobei das Verbindungselement (18) einen länglichen Körper (30) aufweist, wobei ein erster Längsendabschnitt (32) des Körpers (30) und ein zweiter Längsendabschnitt (34) des Körpers (30) quer, insbesondere senkrecht, zu einer Längserstreckung des Körpers (30) des Verbindungselements (18) umgebogen ist, wobei das Verbindungselement (18) kraftschlüssig das erste Hakenelement (14) und das zweite Hakenelement (16) teilweise umgreift.

4. Wandhakensystem (10) nach Anspruch 3,
wobei das erste Hakenelement (14) und das zweite Hakenelement (16) zueinander im Wesentlichen parallel angeordnet sind, wobei der erste Längsendabschnitt (32) an einer Stirnseite (58) des ersten Hakenelements (14) und der zweite Längsendabschnitt (34) an einer Stirnseite (60) des zweiten Hakenelements (16) kraftschlüssig anliegen, wobei die Stirnseite (58) des ersten Hakenelements (14) und die Stirnseite (60) des zweiten Hakenelements (16) voneinander abgewandt sind.

5. Wandhakensystem (10) nach einem der Ansprüche 1 bis 4, wobei das Verbindungselement (18) einen länglichen Körper (30) mit einem ersten Querendabschnitt (38) und einem zweiten Querendabschnitt (40) aufweist, wobei der erste Querendabschnitt (38) und der zweite Querendabschnitt (40) von gegenüber liegenden Längsseiten (42, 44) des Körpers (30) des Verbindungselements (18) vorspringen und formschlüssig in das Führungselement (12) eingreifen.

6. Wandhakensystem (10) nach Anspruch 5,
wobei der Körper des Verbindungselements (18) einen länglichen, flachen Grundkörper (36) aufweist, wobei der erste Querendabschnitt (38) unter einem spitzen Winkel (α) bezüglich des Grundkörpers (36) umgebogen ist.

7. Wandhakensystem (10) nach Anspruch 6,
wobei ein Ende (46) des ersten Querendabschnitts (38) im Wesentlichen quer, insbesondere senkrecht, zum übrigen ersten Querendabschnitt (38) umgebogen ist und vom Grundkörper (36) weg weist.

8. Wandhakensystem (10) nach einem der Ansprüche 5 bis 7, wobei der zweite Querendabschnitt (40) im Wesentlichen quer, insbesondere senkrecht, zum Grundkörper (36) umgebogen ist, wobei ein Ende (48) des zweiten Querendabschnitts (40) quer, insbesondere senkrecht, zum übrigen zweiten Querendabschnitt (40) umgebogen und dem länglichen Körper (30) des Verbindungselements (18) zugewandt ist.

9. Wandhakensystem (10) nach einem der Ansprüche 1 bis 8, wobei das Verbindungselement (18) einstückig und/oder als Blattfeder ausgebildet ist.

10. Wandhakensystem (10) nach einem der vorangehenden Ansprüche, ferner mit:
- einem Anschlagelement (68) für das erste und zweite Hakenelement (14, 16), wobei das Anschlagelement (14, 16) lagefest an dem Führungselement (12) angeordnet ist.

11. Zug, insbesondere Hochgeschwindigkeitszug, mit einem Wandhakensystem (10) zum Aufhängen von Garderobenkleidung nach einem der Ansprüche 1 bis 10.

12. Verfahren zum Zusammenbauen eines Wandhakensystems (10) zum Aufhängen von Garderobenkleidung, insbesondere für einen Zug, nach einem der Ansprüche 1 bis 10, mit:
- Bereitstellen eines länglichen Führungselements (12),
- Bereitstellen von zwei Hakenelementen (14, 16) und
- Anordnen der zwei Hakenelemente (14, 16) an dem Führungselement (12), derart, dass, wobei die zwei Hakenelemente (14, 16) linear entlang des Führungselements (12) bewegbar sind.

## Claims

1. Wall-hook system (10) for hanging up clothing, in particular for a train,
- having an elongate guide element (12) and
- having two hook elements (14, 16), which are arranged on the guide element (12), wherein the two hook elements (14, 16) are designed such that they can be moved linearly along the guide element (12), and
- also having a connecting element (18), by means of which the two hook elements (14, 16) are retained in a fixed position in relation to one another, wherein the connecting element (18) is in releasable engagement with the guide element (12).

2. Wall-hook system (10) according to Claim 1,
wherein the guide element (12) has an elongate body (17), wherein the body (17) has a first mount (52), which extends, at least in part, along a first longitudinal side (50) of the body (17), and a second mount, which extends, at least in part, along a second longitudinal side (54) of the body (17), wherein the two hook elements (14, 16) are in form-fitting engagement with the first mount (52) and the second mount.

3. Wall-hook system (10) according to Claim 2,
wherein the connecting element (18) has an elongate body (30), wherein a first longitudinal end portion (32) of the body (30) and a second longitudinal end portion (34) of the body (30) are bent over transversely, in particular perpendicularly, to a longitudinal extent of the body (30) of the connecting element (18), wherein the connecting element (18) engages around part of the first hook element (14) and the second hook element (16) in a force-fitting manner.

4. Wall-hook system (10) according to Claim 3,
wherein the first hook element (14) and the second hook element (16) are arranged essentially parallel to one another, wherein the first longitudinal end portion (32) butts in a force-fitting manner against an end side (58) of the first hook element (14) and the second longitudinal end portion (34) butts in a force-fitting manner against an end side (60) of the second hook element (16), wherein the end side (58) of the first hook element (14) and the end side (60) of the second hook element (16) are directed away from one another.

5. Wall-hook system (10) according to one of Claims 1 to 4, wherein the connecting element (18) has an elongate body (30) having a first transverse end portion (38) and a second transverse end portion (40), wherein the first transverse end portion (38) and the second transverse end portion (40) project from opposite longitudinal sides (42, 44) of the body (30) of the connecting element (18) and engage in a form-fitting manner in the guide element (12).

6. Wall-hook system (10) according to Claim 5,
wherein the body of the connecting element (18) has an elongate, flat main body (36), wherein the first transverse end portion (38) is bent over at an acute angle (α) in relation to the main body (36).

7. Wall-hook system (10) according to Claim 6,
wherein one end (46) of the first transverse end portion (38) is bent over essentially transversely, in particular perpendicularly, to the rest of the first transverse end portion (38) and is oriented away from the main body (36).

8. Wall-hook system (10) according to one of Claims 5 to 7, wherein the second transverse end portion (40) is bent over essentially transversely, in particular perpendicularly, to the main body (36), wherein one end (48) of the second transverse end portion (40) is bent over transversely, in particular perpendicularly, to the rest of the second transverse end portion (40) and is directed towards the elongate body (30) of the connecting element (18).

9. Wall-hook system (10) according to one of Claims 1 to 8, wherein the connecting element (18) is formed in one piece and/or is designed in the form of a leaf spring.

10. Wall-hook system (10) according to one of the preceding claims,
- also having a stop element (76) for the first and second hook elements (14, 16), wherein the stop element (76) is arranged in a fixed position on the guide element (12).

11. Train, in particular high-speed train, having a wall-hook system (10) for hanging up clothing according to one of Claims 1 to 10.

12. Method of assembling a wall-hook system (10) for hanging up clothing, in particular for a train, according to one of Claims 1 to 10, having the following steps:
- supplying an elongate guide element (12),
- supplying two hook elements (14, 16), and
- arranging the two hook elements (14, 16) on the guide element (12) such that the two hook elements (14, 16) can be moved linearly along the guide element (12).

## Revendications

1. Système (10) de crochet mural pour la suspension de vêtements de vestiaire, notamment dans un train, comprenant
- un élément (12) oblong de guidage et
- deux éléments (14, 16) de crochet, qui sont montés sur l'élément (12) de guidage, les deux éléments (14, 16) de crochet étant constitués mobiles linéairement le long de l'élément (12) de guidage, et comprenant en outre :
- un élément (18) de liaison, au moyen duquel les deux éléments (14, 16) de crochet sont maintenus fixes en position l'un par rapport à l'autre, l'élément (18) de liaison étant en prise de manière amovible avec l'élément (12) de guidage.

2. Système (10) de crochet mural suivant la revendication 1, dans lequel l'élément (12) de guidage a un corps (17) oblong, le corps (17) a un premier logement (52) qui s'étend, au moins en partie, le long d'un premier grand côté (50) du corps (17), et un deuxième logement qui s'étend, au moins en partie, le long d'un deuxième grand côté (54) du corps (17), les deux éléments (14, 16) de crochet étant en prise à complémentarité de forme avec le premier logement (52) et avec le deuxième logement.

3. Système (10) de crochet mural suivant la revendication 2, dans lequel l'élément (18) de liaison a un corps (30) oblong, un premier tronçon (32) d'extrémité en longueur du corps (30) et un deuxième tronçon (34) d'extrémité en longueur du corps (30) étant coudés transversalement, notamment perpendiculairement, à une étendue en longueur du corps (30) de l'élément (18) de liaison, l'élément (18) de liaison entourant, au moins en partie, à complémentarité de force le premier élément (14) de crochet et le deuxième élément (16) de crochet.

4. Système (10) de crochet mural suivant la revendication 3, dans lequel le premier élément (14) de crochet et le deuxième élément (16) de crochet sont disposés sensiblement parallèlement l'un à l'autre, le premier tronçon (32) d'extrémité en longueur s'appliquant à complémentarité de force à un côté (58) frontal du premier élément (14) de crochet et le deuxième tronçon (34) d'extrémité en longueur à un côté (60) frontal du deuxième élément (16) de crochet, le côté (58) frontal du premier élément (14) de crochet et le côté (60) frontal du deuxième élément (16) de crochet étant éloignés l'un de l'autre.

5. Système (10) de crochet mural suivant l'une des revendications 1 à 4,
dans lequel l'élément (18) de liaison ayant un premier tronçon (38) d'extrémité transversale et un deuxième tronçon (40) d'extrémité transversale, le premier tronçon (38) d'extrémité transversale et le deuxième tronçon (40) d'extrémité transversale faisant saillie de grands côtés (42, 44) opposés du corps (30) de l'élément (18) de liaison et pénétrant à complémentarité de forme dans l'élément (12) de guidage.

6. Système (10) de crochet mural suivant la revendication 5, dans lequel le corps de l'élément (18) de liaison a un corps (36) de base oblong plat, le premier tronçon (38) d'extrémité transversale étant coudé suivant un angle (α)aigu par rapport au corps (36) de base.

7. Système (10) de crochet mural suivant la revendication 6, dans lequel une extrémité (46) du premier tronçon (38) d'extrémité transversale est coudée sensiblement transversalement, notamment perpendiculairement, par rapport au reste du premier tronçon (38) d'extrémité transversale, et s'éloigne du corps (36) de base.

8. Système (10) de crochet mural suivant une des revendications 5 à 7,
dans lequel le deuxième tronçon (40) d'extrémité transversale est coudé sensiblement transversalement, notamment perpendiculairement, par rapport au corps (36) de base, une extrémité (48) du deuxième tronçon (40) d'extrémité transversale est coudée transversalement, notamment perpendiculairement, au reste du deuxième tronçon (40) d'extrémité transversale et est tournée vers le corps (30) oblong de l'élément (18) de liaison.

9. Système (10) de crochet mural suivant l'une des revendications 1 à 8,
dans lequel l'élément (18) de liaison est constitué d'une pièce et/ou sous la forme d'un ressort à lame.

10. Système (10) de crochet mural suivant l'une des revendications précédentes, comprenant en outre :
- un élément (68) de butée pour le premier et le deuxième éléments (14, 16) de crochet, l'élément (14, 16) de butée étant monté fixe en position sur l'élément (12) de guidage.

11. Train, notamment train à grande vitesse, ayant un système (10) de crochet mural pour la suspension de vêtements de vestiaire suivant l'une des revendications 1 à 10.

12. Procédé d'assemblage d'un système (10) de crochet mural pour la suspension de vêtements de vestiaire, notamment dans un train, suivant l'une des revendications 1 à 10, dans lequel :
- on se procure un élément (12) oblong de guidage,
- on se procure deux éléments (14, 16) de crochet et
- on met les deux élément (14, 16) de crochet sur l'élément (12) de guidage, de manière à ce que les deux éléments (14, 16) de crochet puissent se déplacer linéairement le long de l'élément (12) de guidage.
